# NEUE EUROPÄISCHE PATENTSCHRIFT

(11) **EP 1 645 671 B2**
(45) Veröffentlichungstag und Bekanntmachung des Hinweises auf die Entscheidung über den Einspruch: **23.10.2019**
(45) Hinweis auf die Patenterteilung: 17.02.2010
(21) Anmeldenummer: 04024014.5
(22) Anmeldetag: 08.10.2004
(51) Int. Cl.: D04H 1/42, D04H 1/58

(54) **POLYMERGEBUNDENE FASERGELEGE**
polymer bound fiber tow
faisceau de fibres liées par un polymère

(43) Veröffentlichungstag der Anmeldung: 12.04.2006
(73) Patentinhaber: SGL Carbon SE, 65203 Wiesbaden (DE)
(72) Erfinder: Krätschmer, Ingrid, 86485 Biberbach (DE); Kienzle, Andreas Dr., 86753 Möttingen OT Balgheim (DE); Wüstner, Dieter, 86199 Augsburg (DE); Häusler, Alfred, 86405 Meitingen (DE); Domagalski, Peter, 86707 Westendorf (DE)

(56) Entgegenhaltungen:
- EP-A- 0 530 741
- EP-A- 1 074 653
- EP-A1- 0 415 436
- EP-A1- 1 008 569
- EP-A1- 1 134 314
- EP-A2- 0 376 472
- EP-A2- 0 864 548
- DE-A- 2 103 908
- DE-A1- 19 962 548
- DE-C1- 19 711 829
- JP-A- H01 160 866
- US-A- 4 364 993
- US-A- 5 532 054
- US-A1- 2004 126 535
- US-B1- 6 410 126
- PATENT ABSTRACTS OF JAPAN Bd. 2000, Nr. 08, 6. Oktober 2000 (2000-10-06) & JP 2000 143826 A (MITSUBISHI CHEMICALS CORP), 26. Mai 2000 (2000-05-26)
- PATENT ABSTRACTS OF JAPAN Bd. 0162, Nr. 02 (C-0940), 14. Mai 1992 (1992-05-14) & JP 4 034060 A (ASAHI FIBER GLASS CO LTD), 5. Februar 1992 (1992-02-05)
- PATENT ABSTRACTS OF JAPAN Bd. 2003, Nr. 02, 5. Februar 2003 (2003-02-05) & JP 2002 294542 A (YAZAWA SANGYO KK), 9. Oktober 2002 (2002-10-09)
- FUDGE, J.: "HexMC-Composites in 3D - A New High Performance Molding Compound", 46th International SAMPE Symposium, May 6-10, 2001, - 10 May 2001 (2001-05-10),

## Beschreibung

Die Erfindung betrifft faserverstärkte keramische Verbundwerkstoffe enthaltend polymergebundene Fasergelege sowie Verfahren zu ihrer Herstellung.

Bei der Herstellung von Faserverbundwerkstoffen werden die verstärkenden Fasern meist in Form von Endlosfasern (Filamenten und Filamentgarnen), Kurzfasern, Kurzfaserbündeln oder in Form von flächigen Gebilden (z.B. als Gewebe, Gewirke, Gestricke, Vliese) eingesetzt.

Während bei der Verarbeitung von Filamenten und Filamentgarnen und auch von flächigen Gebilden definierte Orientierungen der Filamente angestrebt sind ("filament winding", Einlegen von mit Harzen oder Thermoplasten imprägnierten Geweben oder Filzen oder anderen flächigen Gebilden in Formen unter Umformung und Härtung), weisen die kurzfaserverstärkten Werkstoffe üblicherweise eine durch den Verarbeitungsprozeß beeinflusste Orientierung (Ausrichtung der Kurzfasern durch Fließen in der Form bei Spritzguss oder Pressen) und eine durch die Herstellung des Werkstoffs bedingte Faserlängenverteilung auf (beispielsweise bei der Herstellung von faserverstärkten Thermoplasten durch Einziehen von Rovings, also Filamentbündeln, in einem Mischkneter oder Extruder).

Bei der Herstellung von kurzfaserverstärkten Werkstoffen ist eine gezielte Wahl der Faserlänge und deren Verteilung nicht einfach möglich. Bei der Herstellung von Bündeln aus Kurzfasern ist ebenfalls die mittlere Zahl der in einem Bündel vereinigten Fasern von Bedeutung; auch diese "Bündelstärke" soll in einem beherrschbaren Herstellprozeß reproduzierbar einzustellen sein. Durch Verwendung von Siebfraktionen gemahlener Fasern oder Faserbündel läßt sich beispielsweise ein Spektrum der Längenverteilung und der Breitenverteilung der Bündel gezielt einstellen; die Verwendung von Fraktionen mit für den beabsichtigten Zweck ungeeigneten Faserlängen bereitet jedoch Probleme, gegebenenfalls müssen ungeeignete Fraktionen verworfen werden bzw. die Fasern erfüllen den ihnen zugedachten Verstärkungseffekt nur unvollständig. Hingegen ist es möglich, gezielt Kurzfasern mit einstellbarer Faserlänge und einer möglichst scharfen und wählbaren Längenverteilung durch Tränken eines Filamentgarns mit einem flüssigen oder pulverförmigen Kunstharz oder einem flüssigen oder pulverförmigen Thermoplasten unter Bildung eines imprägnierten Filamentstrangs, Pressen des imprägnierten Filamentstrangs zu einem Gelege parallel orientierter Filamente, im Fall der Verwendung eines Kunstharzes Härten des Kunstharzes durch Wärmebehandlung, Abkühlen des flach gepreßten Filamentstranges und Schneiden des Filamentstranges auf definierte Breite und Länge, herzustellen.

Die mechanischen Eigenschaften von faserverstärkten keramischen Werkstoffen sind auch eine Funktion der Faserlänge und der Faserlängenverteilung. Üblicherweise ist bei diesen Verbundwerkstoffen ein Festigkeitsgewinn nur auf Kosten der Dehnung erreichbar, und höhere Dehnungen können nur mit einem Abfall der Festigkeit erkauft werden.

Es besteht daher die Aufgabe, faserverstärkte keramische Werkstoffe zur Verfügung zu stellen, , welche eine hohe Festigkeit und eine hohe Bruchdehnung aufweisen.

Die Erfindung betrifft daher faserverstärkte Verbundwerkstoffe enthaltend Fasergelege mit einer mittleren Länge gemessen in Faserrichtung von 3 mm bis 50 mm und einer mittleren Bündeldicke (Breite) gemessen senkrecht zur Faserrichtung von 0,1 mm bis 10 mm, wobei mindestens 75 % aller Fasergelege eine Länge aufweisen, die mindestens 90 % und nicht mehr als 110 % der mittleren Länge beträgt, wobei die Matrix aus einem keramischen Werkstoff besteht. Die genannten polymergebundenen Fasergelege umfassen Kurzfasern ausgewählt aus Kohlenstoff, keramischen Materialien oder hochschmelzenden Metallen und ein polymeres Bindeharz ausgewählt aus Kunstharzen (Duroplasten) und Thermoplasten.

Die Erfindung betrifft weiter ein Verfahren zur Herstellung von faserverstärkten keramischen Verbundwerkstoffen umfassend die Schritte:
- Tränken eines Filamentgarns mit einem flüssigen oder pulverförmigen Kunstharz unter Bildung eines imprägnierten Filamentstrangs,
- Pressen des imprägnierten Filamentstrangs zu einem Gelege parallel orientierter Filamente,
- Härten des Kunstharzes durch Wärmebehandlung,
- Abkühlen des flach gepreßten Filamentstranges,
- Schneiden des Filamentstranges auf definierte Breite und Länge,- Mischen der geschnittenen Fasergelege mit einem carbonisierbaren Polymeren,
- Formen der Mischung unter Druck und bei erhöhter Temperatur zu einem Formkörper,
- Erhitzen des Formkörpers unter Ausschluss von oxydierenden Stoffen und Bildung eines faserverstärkten porösen Körpers mit einer Matrix aus Kohlenstoff,
- Infiltrieren des porösen Kohlenstoff-Körpers mit der Schmelze eines oder mehrerer carbidbildender Elemente, und Umsetzung zumindest eines Teils des Kohlenstoffs der Matrix zu Carbiden.

In bevorzugter Weise wird mindestens einer der Verfahrensschritte bis zum Schneiden des Filamentstranges auf definierte Breite und Länge, besonders bevorzugt werden alle diese Verfahrensschritte kontinuierlich durchgeführt.

Die Erfindung betrifft auch ein weiteres Verfahren zur Herstellung von faserverstärkten keramischen Verbundwerkstoffen, gemäß dem die nach den obigen Verfahrensschritten bis zum Abkühlen flach zu einem Band gepressten polymergebundenen Filamentstränge, soweit als Filamente solche aus Kohlenstoff, hochschmelzenden Metallen oder keramischen Werkstoffen eingesetzt werden, hergestellt wurden, vor dem Schneiden durch eine Wärmebehandlung unter Ausschluss von oxydierenden Stoffen bei Temperaturen bevorzugt oberhalb von 800 °C carbonisiert werden, wobei das Bindeharz zu Kohlenstoff umgesetzt wird. Danach wird das carbonisierte Band mit einem Pech beschichtet, wonach das mit Pech beschichtete Band auch erneut carbonisiert werden kann, unter Umwandlung des Pechs zu Kohlenstoff. Alternativ zu diesem Schritt kann das carbonisierte Band durch ein Siebdruckverfahren oder einen Walzenauftrag mit weiterem Pech oder carbonisierbaren Polymeren beschichtet werden, wobei dieses Beschichtungsmittel auch Füllstoffe wie pulverförmige keramische Materialien oder Kohlenstoffpulver oder Metallpulver enthalten kann; bevorzugt sind Kohlenstoff-und GraphitPulver, Pulver aus Siliciumcarbid und Siliciumnitrid und Borcarbid, sowie Pulver von Silicium und Legierungen des Silicium mit anderen Metallen wie Eisen, Chrom, Molybdän und anderen carbidbildenden Elementen. Einzelne oder alle genannten Verfahrensschritte können bevorzugt kontinuierlich durchgeführt werden. Danach erfolgen die Schritte des Mischens der geschnittenen Fasergelege mit einem carbonisierbaren Polymeren, Formen der Mischung unter Druck und bei erhöhter Temperatur zu einem Formkörper, Erhitzen des Formkörpers unter Ausschluss von oxydierenden Stoffen und Bildung eines faserverstärkten porösen Körpers mit einer Matrix aus Kohlenstoff und Infiltrieren des porösen Kohlenstoff-Körpers mit der Schmelze eines oder mehrerer carbidbildender Elemente, und Umsetzung zumindest eines Teils des Kohlenstoffs der Matrix zu Carbiden.

Dabei wird als "carbonisierbares Polymer" ein Polymer bezeichnet, das bei Erhitzen auf eine Temperatur von mindestens 800 °C unter Ausschluss von oxydierenden Stoffen einen Kohlenstoff-Rückstand bildet, dessen Masse mindestens 20 % der Masse des eingesetzten Polymeren beträgt.

Als carbidbildendes Element wird bevorzugt Silicium eingesetzt, oder Legierungen des Siliciums mit Metallen ausgewählt aus Eisen, Nickel, Kobalt, Kupfer, Chrom, Molybdän, Vanadium, Aluminium, Mangan und Wolfram.

Bevorzugt sind polymergebundene Faserbündel, die eine Standardabweichung der Länge S_{L} und der Breite S_{B} von dem vorgegebenen Sollwert für die Länge L und die Breite B von höchstens S_{L} = 0,1 ^{∗} L und S_{B} = 0,1 ^{∗} B haben.

Weiter bevorzugt sind solche polymergebundenen Fasergelege (Faserbündel), die ein Verhältnis der Länge zu Bündelbreite von 2: 1 bis 100: 1, besonders bevorzugt von 4: 1 bis 50: 1 aufweisen.

Vorzugsweise wird das Verfahren so durchgeführt, dass die Anzahl der Faserlagen in den Faserbündeln höchstens bei drei, bevorzugt nicht größer als zwei, und besonders bevorzugt nahe bei eins liegt. Dies kann durch Auffächern des Filamentstrangs vor der Imprägnierung oder der Tränkung und durch Wahl des Pressdrucks sichergestellt werden. Dabei wird durch Anblasen mit einem Gas, bevorzugt einem erwärmten Gas, der dabei nicht unter Zug stehende Filamentstrang in Einzelfilamente aufgelöst, die dann nebeneinander über eine Walze oder eine Galette geführt werden.

Der Filamentstrang wird in bevorzugter Weise vor der Tränkung mit dem Polymer durch Waschen und Trocknen oder durch Wärmebehandlung von anhaftender Schlichte befreit. Der Filamentstrang wird dann über eine Umlenkrolle in ein Bad mit einer Lösung oder einer Schmelze eines Kunstharzes oder eines Thermoplasten geführt, in alternativer Weise wird der beispielsweise durch Anblasen mit Druckluft aufgefächerte Filamentstrang durch ein Wirbelbett mit Kunstharz- oder Thermoplastpulver geführt. Die Pulver haften besonders gut auf den Filamenten, wenn der Schritt des Anblasens mit einem erwärmten Gas durchgeführt wird.

Nach der Tränkung oder Imprägnierung wird der Filamentstrang durch einen Walzenstuhl, einen Kalander oder eine Bandpresse oder eine andere geeignete kontinuierliche Presseinrichtung geführt. In dieser Presseinrichtung wird vorzugsweise durch mehrere hintereinander angeordnete Walzenspalte mit abnehmender lichter Weite die überschüssige Menge an Polymeren aus dem Filamentstrang herausgedrückt, und der Strang soweit zusammengepresst, dass bevorzugt nur eine Faserlage mit im wesentlichen parallel verlaufenden Filamenten gebildet wird. Die Verpressung erfolgt im warmen Zustand, dabei kann ein Thermoplast noch fließen und benetzt dabei die Filamente gleichmäßig. Ein Kunstharz beginnt bei dieser Warmverpressung bereits zu härten, die Heizzone ist daher auf das jeweilige Material abzustimmen.

Auch das Abkühlen der jetzt flachen gebundenen Filamentstränge kann bevorzugt in Walzenspalten erfolgen. Beim Verlassen des Walzenstuhls oder der Bandpresse liegt ein Filamentstrang in Form von flachen unidirektionalen Bändern ("UD Tapes") vor.

Diese Bänder werden nun der Länge nach auf eine gewünschte Breite geschnitten, bevorzugt durch eine Schneidwalze oder mehrere nebeneinander angeordnete Schneidwalzen. Es ist auch möglich, die Bänder im noch nicht vollständig gehärteten Zustand durch in den Bandweg gespannte Drähte zu schneiden.

Nach Verlassen der Längsschneideeinrichtung, in der die Bänder auf eine gewählte Breite geteilt werden, gelangt das Material in eine ebenfalls bevorzugt kontinuierlich betriebene Ablängeinrichtung. Es ist jedoch auch möglich, das Ablängen in einem getrennten Verfahren mit unterschiedlicher Bandgeschwindigkeit vorzunehmen; zu diesem Zweck werden die auf die gewählte Breite geschnittenen Bänder auf Spulen aufgewickelt und zur Ablängeinrichtung transportiert.

Das kontinuierliche Verfahren zum Ablängen der Bänder auf die gewünschte Länge wird bevorzugt mit einer Messerwalze durchgeführt.

Die zugeschnittenen Bandstücke werden in geeignete Behälter gefüllt und der weiteren Verwendung zugeführt.

Nach den oben genannten Verfahrensschritten lassen sich in einfacher und reproduzierbarer Weise Bandstücke mit definierte Breite und Länge herstellen. Durch das Abpressen des polymeren Binders und die Einstellung dünner Lagen, bevorzugt von Einzellagen, also Bandstücken, deren Höhe ungefähr dem Durchmesser eines Einzelfilaments entspricht, kann die Menge des in den Bandstücken verbleibenden polymeren Binders sehr gering gehalten werden.

Zur Herstellung von kurzfaserverstärkten keramischen Werkstoffen können diese Bandstücke oder Bündel mit definierte Länge und Breite sortenrein oder in Mischung von verschiedenen Längen oder Breiten eingesetzt werden. Durch geeignete Wahl des polymeren Binders kann sichergestellt werden, dass sich bei Vermischen der Bündel mit den Vorläufern des Matrixmaterials die Bündel nicht oder nur unwesentlich auflösen. Man kann auf diese Weise sicherstellen, dass die Verstärkungsfasern eine einheitliche Länge und Bündelstärke aufweisen; im Fall von Mischungen ist das Spektrum der Faserlängenverteilung oder der Bündeldickenverteilung ebenso gezielt einstellbar.

Die vorteilhaften Eigenschaften derartiger Werkstoffe mit definierter Geometrie (Länge und Breite und Dicke) der Verstärkungsfaserbündel wird durch das nachfolgende Beispiel illustriert.

### Beispiel

Für die Herstellung eines 120 cm breiten Filamentbandes wurden 48 Filamentstränge ®Sigrafil C30T060 EPY (Hersteller SGL Technic Ltd.) parallel über ein Filmtransferverfahren mit einem Phenolharz (®Norsophen PF N 1203, Cray Valley) getränkt und anschließend thermisch vorstabilisiert. Der Abstand zwischen den einzelnen Filamentsträngen betrug dabei 10 mm. Die harzgetränkten Filamentstränge wurden mit Papierzwischenlagen auf Pappkernen aufgerollt.

Im nachfolgenden Schritt wurden die Filamentbahnen mit Hilfe einer Doppelbandpresse auf eine definierte Dicke von **130** Pm verdichtet. Das Harz wurde dabei gleichzeitig durch Aufwärmen auf 180 °C bis zur Formstabilität des Filamentbandes ausgehärtet. Dazu wurden die thermisch vorstabilisierten Filamentbänder über Abspulgestelle in die Bandpresse eingeführt. Bei diesem Vorgehen wurden die Leerräume zwischen den Filamentbändem durch das Auseinanderfließen der Filament/Harz- Bänder gefüllt. Es entstand dabei eine durchgängig 130 Pm dicke, endlose Filamentplatte. Aus dieser Filamentplatte wurden mit einer Schneidvorrichtung definierte Faserbündel mit einer Länge von 12 mm und Breite von 1,5 mm geschnitten.

500 g von diesen definiert geschnittenen Faserbündeln wurden mit 300 g Phenolharz (®Norsophen PF N 1203) und 200 g KS 6 Graphit (Naturgraphit-Pulver) in einem Mischer der Firma Eirich bei einer Drehzahl von 200 min⁻¹ gemischt. Nach einer Mischzeit von 5 Minuten wurde das Mischgefäß entleert. Mit der Pressmasse wurde eine Pressform mit einem Querschnitt von 160 mm X 160 mm befüllt. Das Material in der befüllten Form wurde in einer Presse der Firma Joos bei einer Temperatur von 180 °C auf eine Dichte von 1,2 g/cm³ verdichtet und ausgehärtet.

Der so erhaltene Pressling wurde bei 900 °C unter Stickstoffatmosphäre pyrolysiert. Nach dem Abkühlen wurde ein poröser C/C- Körper (mit Fasern aus Kohlenstoff verstärkter poröser Kohlenstoff) erhalten, der im nächsten Schritt mit flüssigem Silicium bei einer Temperatur von 1550 °C unter vermindertem Druck von ca. 10 hPa (10 mbar) über poröse C/C- Dochte infiltriert wurde. Die Eigenschaften des so erhaltenen C/SiC- Materials (die Matrix enthält Silicium-carbid, Silicium und Reste von nicht umgesetztem Kohlenstoff, die Verstärkungsfasern aus Kohlenstoff bleiben im wesentlichen unverändert) mit einer Dichte von 2,3 g/cm³ zeichnete sich durch hohe Festigkeit und hohe Bruchdehnungswerte aus. Im Biegeversuch wurde eine Festigkeit von 110 MPa bis 120 MPa bei einer Dehnung von 0,3 % bis 0,4 % gemessen.

Die gleichmäßige Verteilung der Faserlängen in dem Verbundwerkstoff wirkt sich also günstig auf Festigkeit und Dehnung aus, während üblicherweise bei Verbundwerkstoffen ein Festigkeitsgewinn nur auf Kosten der Dehnung erreicht werden kann, und höhere Dehnungen mit einem Abfall der Festigkeit erkauft werden.

Als besonders günstig haben sich dabei faserverstärkte keramische Verbundwerkstoffe erwiesen, deren Verstärkungsfasern eine mittlere Länge von zwischen 5 mm und 40 mm, bevorzugt 8 mm bis 30 mm, und besonders bevorzugt 10 mm bis 25 mm aufwiesen, wobei mindestens 90 % der Masse der Verstärkungsfasern eine Länge zwischen 90 % und 110 % der mittleren Faserlänge aufweisen. Eine derartige Verteilung der Faserlängen wird hier auch als "definierte Faserlänge" bezeichnet. Es hat sich auch als günstig erwiesen, dass die Bündeldicke ebenso definiert ist, also dass mindestens 90 % aller Faserbündel eine Dicke haben, die zwischen 90 % und 110 % der mittleren Bündeldicke liegt. Dabei liegt die mittlere Bündeldicke bevorzugt zwischen 0,2 mm und 5 mm, besonders bevorzugt zwischen 0,5 mm und 4 mm, und insbesondere zwischen 0,8 mm und 3 mm.

## Patentansprüche

1. Faserverstärkte Verbundwerkstoffe enthaltend Fasergelege mit einer mittleren Länge gemessen in Faserrichtung von 3 mm bis 50 mm und einer mittleren Bündeldicke gemessen senkrecht zur Faserrichtung von 0,1 mm bis 10 mm, wobei mindestens 75 % aller Fasergelege eine Länge aufweisen, die mindestens 90 % und nicht mehr als 110 % der mittleren Länge beträgt, wobei die Matrix aus einem keramischen Werkstoff besteht.

2. Verfahren zur Herstellung von faserverstärkten keramischen Verbundwerkstoffen, umfassend die Schritte:
- Tränken eines Filamentgarns mit einem flüssigen oder pulverförmigen Kunstharz unter Bildung eines imprägnierten Filamentstrangs,
- Pressen des imprägnierten Filamentstrangs zu einem Gelege parallel orientierter Filamente,
- Härten des Kunstharzes durch Wärmebehandlung
- Abkühlen des flach gepressten Filamentstranges
- Schneiden des wärmebehandelten und abgekühlten Filamentstranges auf definierte Breite und Länge,
- Mischen der geschnittenen Fasergelege mit einem carbonisierbaren Polymeren,
- Formen der Mischung unter Druck und bei erhöhter Temperatur zu einem Formkörper,
- Erhitzen des Formkörpers unter Ausschluss von oxydierenden Stoffen und Bildung eines faserverstärkten porösen Körpers mit einer Matrix aus Kohlenstoff,
Infiltrieren des porösen Kohlenstoff-Körpers mit der Schmelze eines oder mehrerer carbidbildender Elemente, und Umsetzung zumindest eines Teils des Kohlenstoffs der Matrix zu Carbiden.

3. Verfahren zur Herstellung von faserverstärkten keramischen Verbundwerkstoffen, umfassend die Schritte:
- Tränken eines Filamentgarns mit einem flüssigen oder pulverförmigen Kunstharz unter Bildung eines imprägnierten Filamentstrangs,
- Pressen des imprägnierten Filamentstrangs zu einem Gelege parallel orientierter Filamente,
- Härten des Kunstharzes durch Wärmebehandlung
- Abkühlen des flach gepressten Filamentstranges
- Schneiden des wärmebehandelten und abgekühlten Filamentstranges auf definierte Breite und Länge, wobei vor dem Schneiden der zu einem Band flach gepresste Filamentstrang durch Erhitzen unter Ausschluss von oxydierenden Stoffen carbonisiert wird und das carbonisierte Band mit einem carbonisierbaren Polymeren oder einem Pech beschichtet wird, wobei zusätzlich Füllstoffe ausgewählt aus Kohlenstoffpulver, keramischen Pulvern und Pulvern aus carbidbildenden Elementen gemeinsam mit oder anschließend an die Beschichtung mit dem carbonisierbaren Polymeren oder dem Pech aufgebracht werden,
- Mischen der geschnittene Fasergelege mit einem carbonisierbaren Polymeren,
Formen der Mischung unter Druck und bei erhöhter Temperatur zu einem Formkörper,
- Erhitzen des Formkörpers unter Ausschluss von oxydierenden Stoffen und Bildung eines faserverstärkten porösen Körpers mit einer Matrix aus Kohlenstoff,
- Infiltrieren des porösen Kohlenstoff-Körpers mit der Schmelze eines oder mehrerer carbidbildender Elemente, und Umsetzung zumindest eines Teils des Kohlenstoffs der Matrix zu Carbiden.

## Claims

1. Fibre-reinforced composite materials containing fibre scrims with an average length measured in the fibre direction of 3 mm to 50 mm and an average bundle thickness measured perpendicular to the fibre direction of 0.1 mm to 10 mm, wherein at least 75% of all fibre scrims have a length that amounts to at least 90% and no more than 110% of the average length, wherein the matrix consists of a ceramic material.

2. Method for the manufacture of fibre-reinforced ceramic composite materials comprising the steps:
saturating a filament yarn with a fluid or powder-form synthetic resin while forming an impregnated filament strang,
- pressing of the impregnated filament strang into a crimp of parallel-oriented filaments,
- hardening of the synthetic resin by heat treatment,
- cooling of the flat-pressed filament strang,
- cutting of the heat treated and cooled filament strang to a defined width and length,
- mixing of the cut fibre scrimps with a carbonisable polymer,
shaping of the mixture under pressure and at elevated temperature into a shaped body,
- heating of the shaped body in the absence of oxidising substances and formation of a fibre-reinforced porous body with a matrix of carbon,
- infiltrating of the porous carbon body with the melt of one or a plurality of carbide-forming elements, and conversion of at least a part of the carbon of the matrix to carbides.

3. Method for the manufacture of fibre-reinforced ceramic composite materials comprising the steps:
- saturating a filament yarn with a fluid or powder-form synthetic resin while forming an impregnated filament strang,
- pressing of the impregnated filament strang into a crimp of parallel-oriented filaments,
- hardening of the synthetic resin by heat treatment,
- cooling of the flat-pressed filament strang,
- cutting of the heat treated and cooled filament strang to a defined width and length, wherein, pior to cutting the filament strang that has been pressed flat into a tape is carbonised by heating in the absence of oxidising substances and the carbonised tape is coated with a carbonisable polymer or a pitch, wherein additional fillers selected from carbon powder, ceramic powders and powders of carbide-forming elements can be applied together with, or subsequent upon, the coating with the carbonisable polymer or the pitch,
- mixing of the cut fibre scrimps with a carbonisable polymer,
- shaping of the mixture under pressure and at elevated temperature into a shaped body,
- heating of the shaped body in the absence of oxidising substances and formation of a fibre-reinforced porous body with a matrix of carbon,
- infiltrating of the porous carbon body with the melt of one or a plurality of carbide-forming elements, and conversion of at least a part of the carbon of the matrix to carbides.

## Revendications

1. Matériaux composites renforcés aux fibres contenant des grilles de fibre ayant une longueur moyenne mesurée dans le sens des fibres de 3 mm à 50 mm et une épaisseur moyenne de faisceau mesurée perpendiculairement au sens des fibres de 0,1 mm à 10 mm, au moins 75 % de toutes les grilles de fibres présentant une longueur représentant au moins 90 % et pas plus de 110 % de la longueur moyenne, dans laquelle le matrice est composée d'un matériau céramique.

2. Procédé de fabrication de matériaux composites céramiques renforcés aux fibres, comprenant les étapes :
- imprégnation d'un fil à filaments avec une résine synthétique liquide ou poudreuse en formant un cordon de filaments imprégné,
- pressage du cordon de filaments imprégné en une nappe de filaments orientés parallèlement,
- durcissement de la résine synthétique par traitement thermique,
- refroidissement du cordon de filaments pressé,
- découpe du cordon de filaments traité thermiquement et refroidi à une largeur et longueur définies,
- le mélange des grilles de fibre découpés avec un polymère apte à carbonisation,
- le moulage du mélange sous pression et à température accrue en un corps moulé,
- le chauffage du corps moulé sous exclusion de substances oxydantes et la formation d'un corps poreux renforcé aux fibres avec une matrice en carbone,
- l'infiltration du cors poreux en carbone avec la coulée d'un ou plusieurs éléments formant du carbure et la transformation d'au moins une partie du carbone de la matrice en carbures.

3. Procédé de fabrication de matériaux composites céramiques renforcés aux fibres, comprenant les étapes :
- imprégnation d'un fil à filaments avec une résine synthétique liquide ou poudreuse en formant un cordon de filaments imprégné,
- pressage du cordon de filaments imprégné en une nappe de filaments orientés parallèlement,
- durcissement de la résine synthétique par traitement thermique,
- refroidissement du cordon de filaments pressé,
- découpe du cordon de filaments traité thermiquement et refroidi à une largeur et longueur définies, dans laquelle, avant la découpe, le cordon de filaments pressé à plat en une bande est carbonisé par chauffage sous exclusion de substances oxydantes, et la bande carbonisée est revêtue d'un polymère apte à la carbonisation ou d'une poix, dans laquelle, en outre, des matières de charge sélectionnées parmi la poudre de carbone, les poudres céramiques et poudres d'éléments formant du carbure pouvant être appliquées simultanément ou après le revêtement avec le polymère apte à carbonisation ou la poix,
- le mélange des grilles de fibre découpés avec un polymère apte à carbonisation,
- le moulage du mélange sous pression et à température accrue en un corps moulé,
- le chauffage du corps moulé sous exclusion de substances oxydantes et la formation d'un corps poreux renforcé aux fibres avec une matrice en carbone,
- l'infiltration du cors poreux en carbone avec la coulée d'un ou plusieurs éléments formant du carbure et la transformation d'au moins une partie du carbone de la matrice en carbures.
